# EUROPEAN PATENT APPLICATION

(11) **EP 4 618 229 A1**
(43) Date of publication of application: **17.09.2025**
(21) Application number: 24200455.4
(22) Date of filing: 16.09.2024
(51) Int. Cl.: H01M 10/42, H01M 10/653, H01M 10/6551

(54) **BATTERY PACK**

(30) Priority: 12.03.2024 KR 20240034417
(71) Applicant: SAMSUNG SDI CO., LTD., Yongin-si, Gyeonggi-do 17084 (KR)
(72) Inventor: Jang, Bong Koun, 16678 Suwon-si, Gyeonggi-do (KR); Kang, Chan Woo, 16678 Suwon-si, Gyeonggi-do (KR)
(74) Representative: Gulde & Partner

(57) **Abstract**

A battery pack (1) includes a battery cell (100), a terrace (200) extending from the battery cell (100), a protection circuit module (300) facing the terrace (200), and a protective film (400) including a thermally conductive material and arranged around the protection circuit module (300).

## Description

### BACKGROUND

### 1. Field

Aspects of embodiments of the present invention relate to a battery pack.

### 2. Description of the Related Art

In general, as demand for portable electronic products, such as laptop computers, video cameras, and mobile phones, increases rapidly, and the commercialization of robots, electric vehicles, and the like begins in earnest, research on a battery pack capable of repeated charging/discharging is being actively conducted.

The battery pack may include a battery cell for supplying power, and a protection circuit module (PCM) electrically connected to the battery cell to continuously detect and control values such as voltage, current, temperature, and the like. A size of the protection circuit module is also increasing as the charging specification of the battery pack gradually increases in response to customer demand. However, as the size of the protection circuit module increases, capacity loss of the battery pack may occur.

### SUMMARY

According to an aspect of embodiments of the present disclosure, a battery pack capable of reducing the size of a protection circuit module by improving heating temperature of the protection circuit module is provided.

The above and other aspects and features of the present disclosure will be described in or will be apparent from the following description of some embodiments of the present disclosure.

According to one or more embodiments of the present invention, a battery pack includes a battery cell, a terrace extending from the battery cell, a protection circuit module facing the terrace, and a protective film including a thermally conductive material and arranged around (e.g., surrounding) the protection circuit module.

The protection circuit module may include a substrate having a first surface facing the terrace and a second surface on an opposite side of the first surface, and one or more field-effect transistors (FETs) on the second surface.

The protection circuit module may further include a molding member covering the one or more field-effect transistors on the second surface.

The one or more field-effect transistors may include two field-effect transistors on the second surface.

The molding member may include a molding body around (e.g., surrounding) the one or more field-effect transistors, wherein the molding body may include a fixing surface that is fixed to the substrate, a first heat dissipation surface on an opposite side of the fixing surface and facing the protective film, and a second heat dissipation surface connecting the fixing surface to the first heat dissipation surface and facing the protective film.

The molding body may extend along the substrate, and each of the first heat dissipation surface and the second heat dissipation surface may have a flat surface to be in surface contact with the protective film.

The battery pack may further include a fixing tape between the terrace and the protection circuit module and configured to fix the protection circuit module to the terrace, wherein the fixing tape may include a first fixing portion seated on the terrace and facing the first surface, and a second fixing portion seated on the battery cell and facing a side surface of the substrate and a side surface of the molding member.

The protective film may include a thermal conductive layer including a thermally conductive material, an insulating layer stacked on an inner side surface of the thermal conductive layer and facing the protection circuit module, and a protective layer stacked on an outer side surface of the thermal conductive layer.

The thermal conductive layer may include graphite.

An area of the thermal conductive layer may be greater than or equal to 350 mm² and less than 450 mm².

The thermal conductive layer may have a rectangular shape having a horizontal-direction width of 46 mm and a longitudinal-direction width of 9 mm.

A thickness of the thermal conductive layer may be greater than or equal to 30 µm and less than 35 µm.

The insulating layer may include at least one of polyethylene terephthalate (PET), polypropylene (PP), polyimide (PI), polyethylene (PE), and aramid.

The protective layer may include a flame-retardant layer including an insulating material, and an adhesive layer including an adhesive material, located between the flame-retardant layer and the thermal conductive layer, and configured to bond the flame-retardant layer to the thermal conductive layer, wherein the flame-retardant layer may include at least one of polyethylene terephthalate (PET), polypropylene (PP), polyimide (PI), polyethylene (PE), and aramid.

The insulating layer may have a first thickness, and the protective layer may have a second thickness greater than the first thickness.

The protective film may include a heat dissipation portion around (e.g., surrounding) the protection circuit module and on which the thermal conductive layer is located, a first fixed end portion on an end of the heat dissipation portion and fixed to the battery cell, and a second fixed end portion on an opposite side of the first fixed end portion and fixed to the terrace.

The heat dissipation portion may be formed by stacking the thermal conductive layer, the insulating layer, and the protective layer, and the first fixed end portion and the second fixed end portion may be formed by stacking the insulating layer and the protective layer.

The protection circuit module may include a substrate having a first surface facing the terrace and a second surface on an opposite side of the first surface, one or more field-effect transistors on the second surface, and a molding member covering the one or more field-effect transistors on the second surface, and the heat dissipation portion may include a first heat dissipation portion facing a first heat dissipation surface on a surface of the molding member, a second heat dissipation portion facing a second heat dissipation surface on a side surface of the molding member, and a third heat dissipation portion facing a side surface of the substrate.

The heat dissipation portion may further include a fourth heat dissipation portion in contact with an outer surface of the terrace, and the first heat dissipation portion, the second heat dissipation portion, the third heat dissipation portion, and the fourth heat dissipation portion may form a "U" shape.

The protective film may further include a third fixed end portion extending along an edge portion of the heat dissipation portion between the first fixed end portion and the second fixed end portion and connected to the first fixed end portion and the second fixed end portion, and a fourth fixed end portion on an opposite side of the third fixed end portion and connected to the first fixed end portion and the second fixed end portion.

The protective film may further include a side surface protection portion extending in a horizontal direction from the third fixed end portion, bent or folded toward the protection circuit module from the terrace side, and covering a side portion of each of the terrace and the protection circuit module in the horizontal direction.

The battery pack may further include a heat dissipation blocking member in contact with a portion of the protection circuit module or a portion of the protective film.

The heat dissipation blocking member may include a material having a lower thermal conductivity than the protective film.

The protective film may include graphite, and the heat dissipation blocking member may include aerogel or a ceramic.

The heat dissipation blocking member may be located inside the protective film, and the protective film may be around (e.g., surrounding) the protection circuit module and the heat dissipation blocking member together.

The heat dissipation blocking member may be outside the protective film, surrounded by a binding member, and bound to the protective film.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure is not to be construed as being limited to the drawings.
FIG. 1 is a perspective view schematically illustrating a configuration of a battery pack according to an embodiment of the present invention;
FIG. 2 is an exploded perspective view schematically illustrating a configuration of the battery pack according to the embodiment of FIG. 1;
FIG. 3 is an exploded perspective view schematically illustrating a configuration of the battery pack according to the embodiment of FIG. 1 when viewed from a direction different from that of FIG. 2;
FIG. 4 is an exploded perspective view schematically illustrating a state in which a protection circuit module is further separated from FIG. 2;
FIG. 5 is a cross-sectional view taken along the line A-A' of FIG. 1;
FIG. 6 is a cross-sectional view illustrating an example in which a protective film according to the embodiment of FIG. 1 is attached to the protection circuit module;
FIG. 7 is a conceptual view illustrating an example of a heat transfer path according to the configuration of the battery pack according to the embodiment of FIG. 1;
FIG. 8 is a view schematically illustrating a configuration of the protective film according to the embodiment of FIG. 1;
FIG. 9 is a cross-sectional view showing a point "B" in FIG. 8;
FIG. 10 is a table illustrating results of measuring a heating temperature of the protection circuit module according to an area of a thermal conductive layer according to the embodiment of FIG. 1;
FIG. 11 is a graph illustrating the measurement results depicted in FIG. 10;
FIG. 12 is a table illustrating results of measuring a heating temperature of the protection circuit module according to a thickness of the thermal conductive layer according to the embodiment of FIG. 1;
FIG. 13 is a graph illustrating the measurement results depicted in FIG. 12;
FIG. 14 is a graph illustrating results of measuring heat generation for each heat dissipation material;
FIG. 15 is a graph illustrating results of measuring a heating temperature of the battery pack according to the embodiment of FIG. 1;
FIG. 16 is a conceptual view schematically illustrating a configuration of a battery pack according to another embodiment of the present invention;
FIG. 17 is a conceptual view illustrating an example of a heat transfer path according to the configuration of the battery pack according to the embodiment of FIG. 16;
FIG. 18 is a conceptual view schematically illustrating a configuration of a battery pack according to another embodiment of the present invention; and
FIG. 19 is a conceptual view illustrating an example of a heat transfer path according to the configuration of the battery pack according to the embodiment of FIG. 18.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and are to be interpreted as having a meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

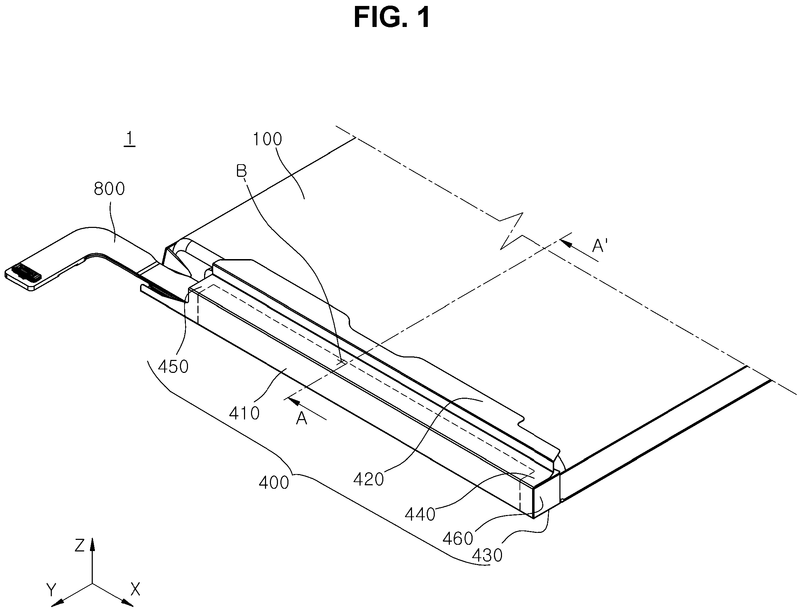

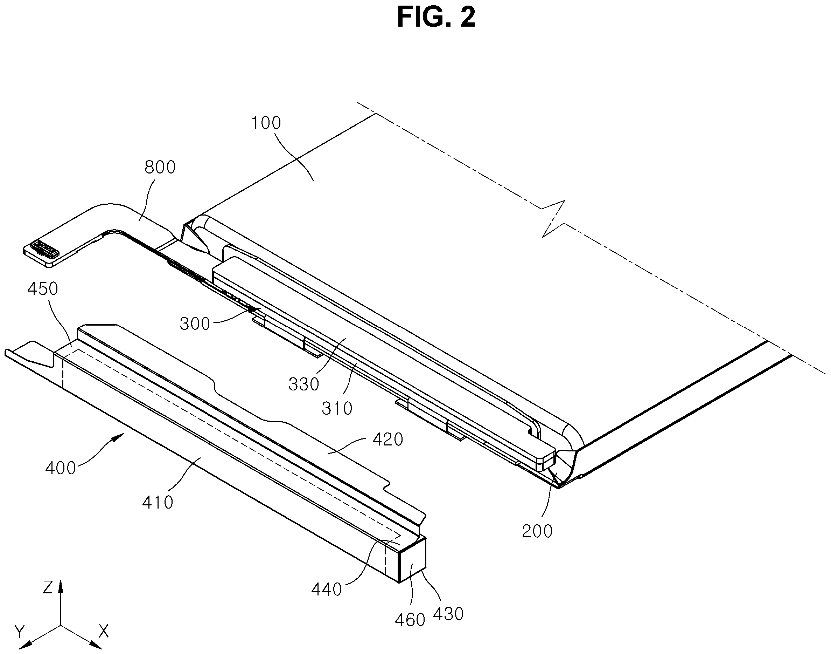

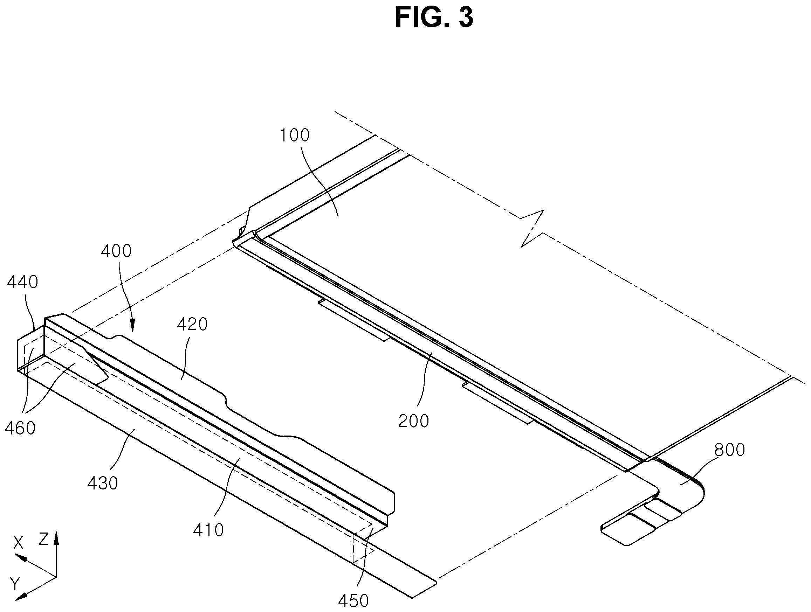

FIG. 1 is a perspective view schematically illustrating a configuration of a battery pack according to an embodiment of the present invention; FIG. 2 is an exploded perspective view schematically illustrating a configuration of the battery pack according to the embodiment of FIG. 1; and FIG. 3 is an exploded perspective view schematically illustrating a configuration of the battery pack according to the embodiment of FIG. 1 when viewed from a direction different from that of FIG. 2.

Herein, a shape and arrangement relationship of components constituting the battery pack according to the present embodiment will be described by setting an X direction illustrated in FIGS. 1 to 3 as a left-right direction or a horizontal direction, setting a Y direction as a length direction or a longitudinal direction, and setting a Z direction as a height direction, a thickness direction, or a vertical direction.

Referring to FIGS. 1 to 3, a battery pack 1 according to the present embodiment includes a battery cell 100, a terrace 200, a protection circuit module 300, and a protective film 400.

The battery cell 100 is a unit structure that stores and supplies power, and may be, for example, a lithium secondary battery capable of charging and discharging a certain amount (e.g., a predetermined amount) of power. The battery cell 100 according to the present embodiment may be, for example, a pouch-type battery cell that includes an electrode assembly (not shown) and a casing material (not shown) that surrounds the electrode assembly.

Although not shown in the drawings, the electrode assembly may be formed in a winding type in which first and second electrode plates and a separator interposed between the first and second electrode plates are wound in a roll shape, or may be formed in a stack type in which first and second electrode plates and a separator are stacked with respect to each other.

The terrace 200 extends from the battery cell 100 and supports the protection circuit module 300, which will be described below, with respect to the battery cell 100. The terrace 200 according to the present embodiment may have a form of a plate horizontally extending in a direction (Y-axis direction based on FIG. 1) parallel to a longitudinal direction of the battery cell 100 from an end surface of the battery cell 100. The terrace 200 may be integrally formed with the battery cell 100, or may be fabricated separately from the battery cell 100 and subsequently coupled to the battery cell 100. A lower surface of the terrace 200 may be disposed to be spaced apart from a bottom surface of the battery pack on which the battery cell 100 is seated.

The protection circuit module 300 is disposed on the terrace 200 to face the terrace 200, and is electrically connected to the battery cell 100. The protection circuit module 300 may form a path for a charging and discharging current of the battery cell 100, or perform a protection operation to prevent or substantially prevent overheating or explosion caused by overheating, overcharging, overdischarging, or the like of the battery cell 100.

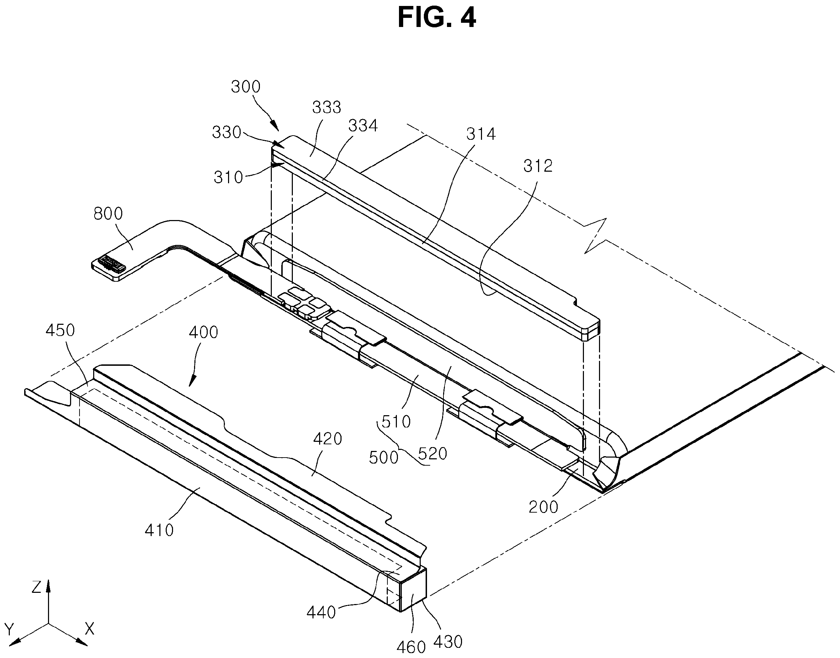

FIG. 4 is an exploded perspective view schematically illustrating a state in which the protection circuit module is further separated from FIG. 2.

Referring to FIGS. 2 and 4, the protection circuit module 300 according to the present embodiment may have a structure in which a substrate 310, a field-effect transistor (FET) 320, and a molding member 330 are integrally coupled.

The substrate 310 may have a flat plate shape having a first surface 312 and a second surface 313 opposite to each other. The first surface 312 may be disposed to face downward, and may be disposed to face an upper surface of the terrace 200. The second surface 313 of the substrate 310 is disposed to face upward, and may be disposed to face an upper space of the battery cell 100.

The substrate 310 according to the present embodiment may include a substrate body 311, and the first surface 312, the second surface 313, and a substrate outer side surface 314, which is formed on outer surfaces of the substrate body 311. The substrate body 311 may have a rectangular parallelepiped shape as a whole, which has a horizontal width (an X-direction width) and a vertical width (a Y-direction width), corresponding to the terrace 200. In an embodiment, each of the first surface 312 and the second surface 313 may have a rectangular shape as a whole.

The substrate outer side surface 314 may be formed on a side surface of the substrate body 311 facing an external space, and may have a flat surface that may be in surface contact with the protective film 400. Here, facing the external space refers to facing in a direction opposite to a direction in which the battery cell 100 faces. The substrate outer side surface 314 may have an area defined by a thickness (a Z-direction width) and the horizontal width (the X-direction width) of the substrate body 311.

Electronic elements may be selectively mounted on the first surface 312 and the second surface 313 of the substrate 310 to form a path for charging and discharging current of the battery cell 100, or to perform a protection operation to prevent or substantially prevent overheating or explosion caused by overheating, overcharging, overdischarging, or the like of the battery cell 100. The electronic elements may include the FET 320 that uses an electric field to control current flow through a semiconductor material. In an embodiment, a metal-oxide-semiconductor field-effect transistor (MOSFET) may be applied as the FET 320.

The FET 320 according to the present embodiment may not be disposed on the first surface 312, but may be disposed on the second surface 313. In an embodiment, two FETs 320 are disposed on the second surface 313, for example.

The molding member 330 covers the FETs 320 on the second surface 313. The molding member 330 according to the present embodiment may include a molding body 331 surrounding the FET 320, and a fixing surface 332, a first heat dissipation surface 333, and a second heat dissipation surface 334 may be formed on outer surfaces of the molding body 331.

The molding body 331 is formed to extend in the horizontal direction (X direction) along the substrate 310, and has a thickness (a Z-direction thickness) to the extent of covering the electronic elements including the FETs 320. In an embodiment, the molding body 331 may have a rectangular parallelepiped shape as a whole, which has a horizontal width (an X-direction width) and a vertical width (a Y-direction width), corresponding to an upper surface of the substrate 310, i.e., the second surface 313.

The molding body 331 may be formed using any of various molding materials and molding methods, and is not specifically limited, including known technologies, as long as the present embodiment can be implemented. As an example, the molding body 331 may include epoxy or the like.

The fixing surface 332 may be disposed on a bottom surface of the molding body 331, and may be fixed to the second surface 313 of the substrate 310. In an embodiment, the fixing surface 332 may be formed by melting and bonding a molding material forming the molding body 331 to the second surface 313. In an embodiment, the fixing surface 332 has a rectangular shape as a whole corresponding to the second surface 313 and may be integrally coupled to the entire second surface 313.

The molding member 330 may be stably fixed and maintained at a position (e.g., a set position) on the second surface 313 by the fixing surface 332 while surrounding and protecting all of a plurality of electronic elements including circuitry formed on the second surface 313 and the FETs 320 mounted on the second surface 313 by the molding body 331.

The first heat dissipation surface 333 is disposed on an opposite side of the fixing surface 332, i.e., on an upper surface of the molding body 331, and is in contact with the protective film 400. The fixing surface 332 and the first heat dissipation surface 333 may each have a rectangular shape as a whole, which has a horizontal width (an X-direction width) and a vertical width (a Y-direction width), corresponding to the upper surface of the substrate 310, that is, the second surface 313.

The first heat dissipation surface 333 may have a flat surface capable of being in surface contact with the protective film 400. Here, the term "flat surface" refers to the formation of a continuous contact surface capable of being in surface contact with the protective film 400. In an embodiment, the first heat dissipation surface 333 may have a rectangular shape as a whole, and a portion of the first heat dissipation surface 333 may be formed to be rounded. In an embodiment, a protrusion or a groove may be formed on a portion of the first heat dissipation surface 333.

The second heat dissipation surface 334 is formed on an outer side surface of the molding body 331 facing the external space, and is in contact with the protective film 400. The second heat dissipation surface 334 may connect the fixing surface 332 to the first heat dissipation surface 333. The second heat dissipation surface 334 may have an area defined by the thickness (the Z-direction thickness) and the horizontal width (the X-direction width) of the molding body 331. The second heat dissipation surface 334 forms a flat surface to be in surface contact with the protective film 400. The second heat dissipation surface 334 forms a continuous flat surface with the substrate outer side surface 314 of the substrate 310 to be in surface contact with the protective film 400.

In this case, the protective film 400 faces the first heat dissipation surface 333 and the second heat dissipation surface 334 of the molding member 330, and the substrate outer side surface 314 of the substrate 310 in turn from the upper side, and heat generated by the FET 320 mounted on the substrate 310 may be transferred to the protective film 400 through the first heat dissipation surface 333, the second heat dissipation surface 334, and the substrate outer side surface 314.

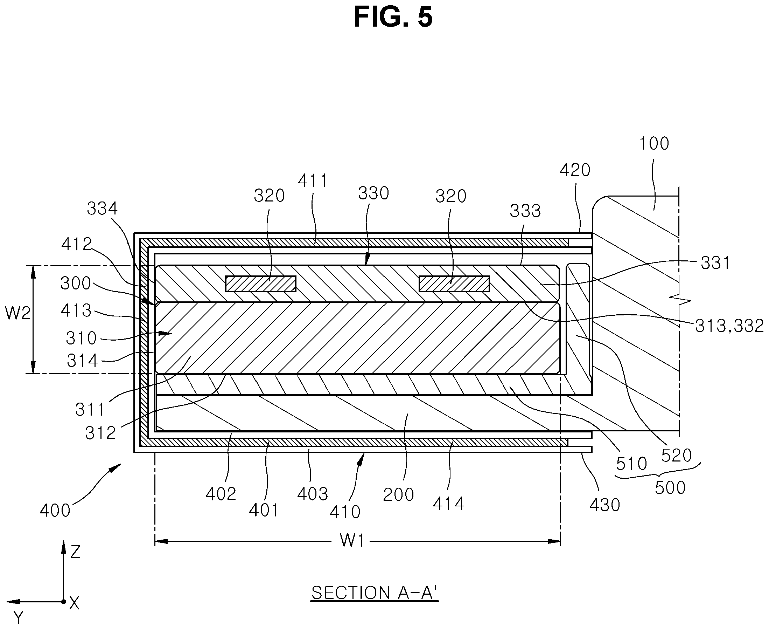

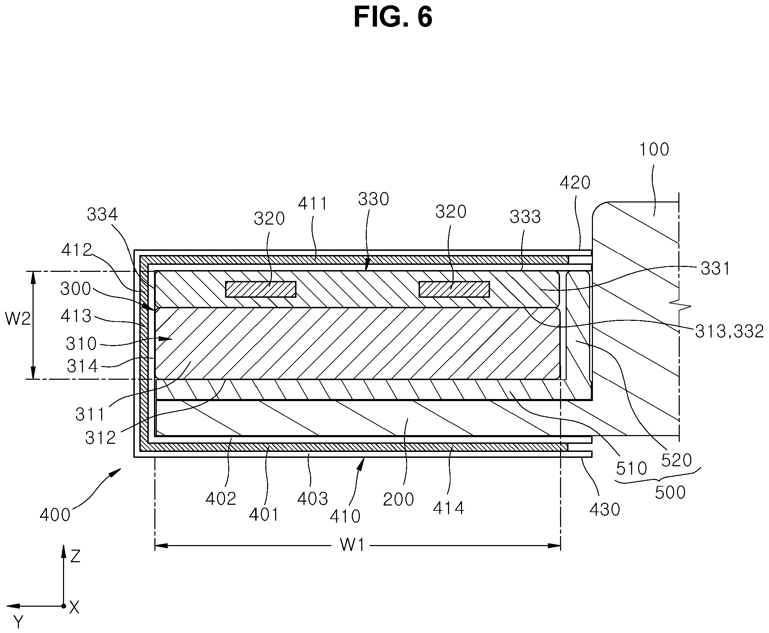

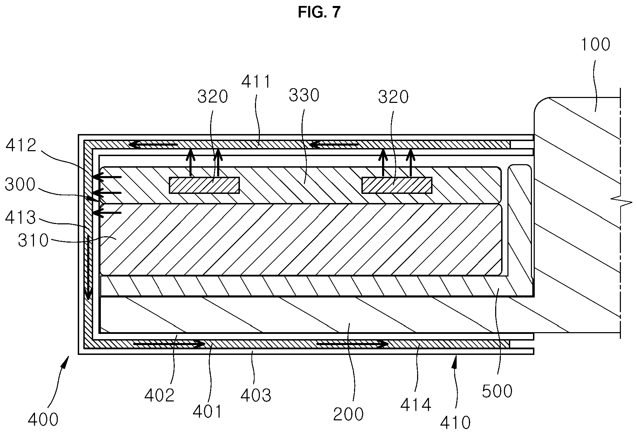

FIG. 5 is a cross-sectional view taken along the line A-A' of FIG. 1; FIG. 6 is a cross-sectional view illustrating an example in which the protective film according to the embodiment of FIG. 1 is attached to the protection circuit module; and FIG. 7 is a conceptual view illustrating an example of a heat transfer path according to the configuration of the battery pack according to the embodiment of FIG. 1.

Referring to FIGS. 5 and 6, the protective film 400 is formed to have a thin film shape and includes a thermally conductive material. The protective film 400 may be disposed around (e.g., to surround) the protection circuit module 300 outside the battery cell 100. The protective film 400 may function to protect the protection circuit module 300 from external foreign substances and the like. In an embodiment, the protective film 400 may dissipate heat generated by the protection circuit module 300 through the thermally conductive material across the entire surface thereof.

In an embodiment, the protective film 400 may be in contact with only a portion of the protection circuit module 300 as shown in FIG. 5. For example, the protective film 400 may be disposed to be in contact with the second heat dissipation surface 334 of the molding member 330, and to be spaced apart from or lifted from the first heat dissipation surface 333 of the molding member 330. As shown in FIG. 6, the protective film 400 may be disposed to be in contact with both the first heat dissipation surface 333 and the second heat dissipation surface 334 of the molding member 330.

Referring to FIGS. 5 and 6, in the battery pack 1 according to an embodiment of the present invention, the protection circuit module 300 may be seated on and coupled to the upper surface of the terrace 200 and a side surface of the battery cell 100 through a fixing tape 500. In an embodiment, the protective film 400 may be disposed and coupled to extend to a bottom surface of the terrace 200 while surrounding an upper surface portion and a side surface portion of the protection circuit module 300, which are exposed to the external space, in a "U" shape. In an embodiment, the protection circuit module 300 may have a structure in which two FETs 320 are disposed on the upper surface of the substrate 310, and the molding member 330 is integrally coupled to the upper surface of the substrate 310 while surrounding the two FETs 320.

Referring to FIG. 7, heat generated by the FET 320 may be transferred to the protective film 400 through an upper surface and a side surface of the molding member 330 and a side surface of the substrate 310, which are in contact with the protective film 400. A thermal conductive layer 401 may be disposed to continuously extend across an upper portion, a side portion, a lower portion of the protective film 400.

The heat transferred from the protection circuit module 300 to the upper portion and an upper side portion of the protective film 400 may smoothly, or easily, reach a lower side portion and the lower portion of the protective film 400, which is located below the upper portion and the upper side portion of the protective film 400, along the thermal conductive layer 401. Through this process, the heat generated by the FET 320 may be uniformly or substantially uniformly transferred and distributed throughout the protective film 400. The heat generated by the FET 320 may be uniformly or substantially uniformly dissipated by the protective film 400 throughout the battery pack 1, including a lower side portion and a lower portion of the battery pack 1, rather than being concentrated and dissipated only in on an upper portion and an upper side portion of the battery pack 1, on which the FET 320 is disposed.

The upper and side surfaces of the molding member 330 and the side surface of the substrate 310 may be the first and second heat dissipation surfaces 333 and 334 of the molding member 330 and the substrate outer side surface 314 of the substrate 310, respectively, shown in FIG. 5. The upper portion of the protective film 400 may be a first heat dissipation portion 411, and the upper side portion of the protective film 400 may be a second heat dissipation portion 412 and a third heat dissipation portion 413. The lower side portion and the lower portion of the protective film 400 may be a fourth heat dissipation portion 414.

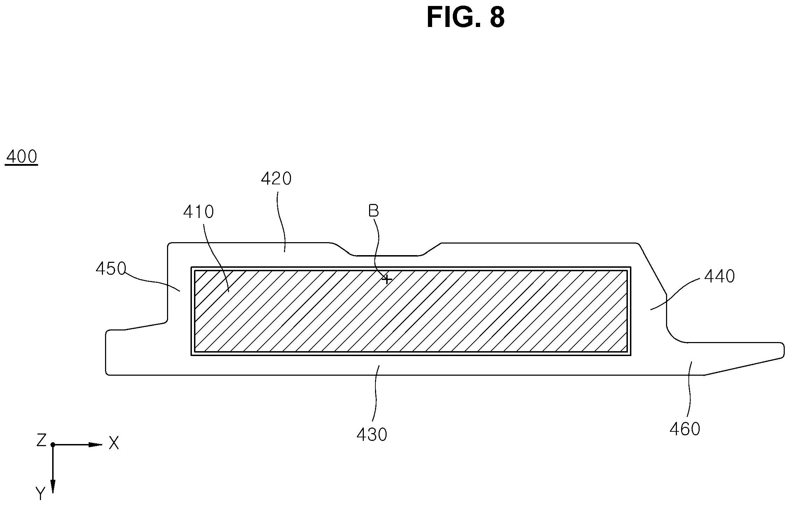

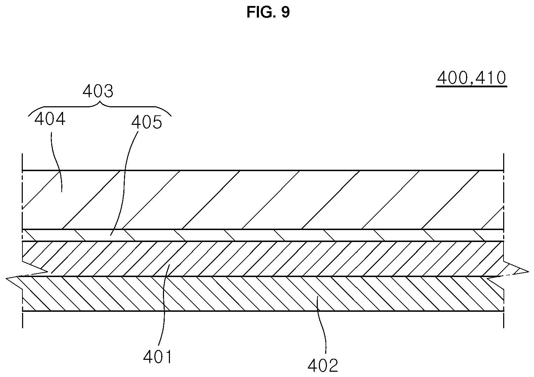

FIG. 8 is a view schematically illustrating a configuration of the protective film according to the embodiment of FIG. 1; and FIG. 9 is a cross-sectional view showing a point "B" in FIG. 8.

Referring to FIGS. 8 and 9, the protective film 400 according to the present embodiment may be formed by stacking and bonding the thermal conductive layer 401, an insulating layer 402, and a protective layer 403. The insulating layer 402 is disposed under the thermal conductive layer 401, and the protective layer 403 may be disposed on the thermal conductive layer 401, opposite to the insulating layer 402. As shown in FIG. 5, in a state in which the protective film 400 is around (e.g., surrounds) the protection circuit module 300, the insulating layer 402 disposed to face the protection circuit module 300 is stacked on an inner side surface of the thermal conductive layer 401, and the protective layer 403 is stacked on an outer side surface of the thermal conductive layer 401.

The thermal conductive layer 401 may include a thermally conductive material. In an embodiment, the thermally conductive material of the thermal conductive layer 401 may include graphite. An edge of the thermal conductive layer 401 is indicated by a dashed line on FIGS. 1 to 4. In an embodiment, heat transfer may be continuously performed over the entire region in which the thermal conductive layer 401 is disposed, and heat generated by the protection circuit module 300 may be discharged to the outside.

The insulating layer 402 includes an insulating material and may be stacked and bonded to a surface of the thermal conductive layer 401. The insulating layer 402 may be disposed to face the battery cell 100, the terrace 200, and the protection circuit module 300. In an embodiment, the insulating material of the insulating layer 402 may include at least one of polyethylene terephthalate (PET), polypropylene (PP), polyimide (PI), polyethylene (PE), and aramid. The insulating layer 402 may be formed of any of the insulating materials described above to securely insulate the protection circuit module 300 from other external electronic components or conductive materials.

The insulating layer 402 may have a sheet form with an adhesive material coated on some or all of a surface thereof. In an embodiment, the insulating layer 402 may have a double-sided tape structure. The protective film 400 may be firmly bonded and fixed to the battery cell 100 and the terrace 200 by the adhesive material of the insulating layer 402.

The protective layer 403 may include a flame-retardant material, and may be stacked and bonded to another surface of the thermal conductive layer 401, that is, on an opposite side of the insulating layer 402. In a state in which the protective film 400 is coupled to surround the protection circuit module 300 as shown in FIG. 1, the protective layer 403 may be exposed to the outside, and the insulating layer 402 may be positioned on the inside.

The protective layer 403 according to the present embodiment may include a flame-retardant layer 404 and an adhesive layer 405. The flame-retardant layer 404 may include a flame-retardant material, and the adhesive layer 405 may include an adhesive material. The adhesive layer 405 may be disposed between the flame-retardant layer 404 and the thermal conductive layer 401 and may bond the flame-retardant layer 404 to the thermal conductive layer 401.

In an embodiment, the flame-retardant material of the flame-retardant layer 404 may include at least one of polyethylene terephthalate (PET), polypropylene (PP), polyimide (PI), polyethylene (PE), and aramid. The flame-retardant layer 404 is formed of the flame-retardant material described above, and may prevent or substantially prevent the protection circuit module 300 from being directly exposed to flames in the event of a fire. The protective layer 403 may have any of various thicknesses depending on an intended flame-retardant performance.

The insulating layer 402 and the protective layer 403 may be flexible to bend around corners or stepped portions of the battery cell 100, the terrace 200, and the protection circuit module 300. The insulating layer 402 may have a first thickness that can insulate the protection circuit module 300 from the thermal conductive layer 401. The protective layer 403 may have a second thickness greater than the first thickness. Accordingly, the protective layer 403 may more securely protect the thermal conductive layer 401 and the protection circuit module 300 against flames and external impacts, and may be deformed to be stretched more than the insulating layer 402 at the corner or the stepped portion.

Referring to FIGS. 1 to 3 and 8, the protective film 400 according to the present embodiment may include a heat dissipation portion 410, a first fixed end portion 420, and a second fixed end portion 430.

The heat dissipation portion 410 is a portion in which the thermal conductive layer 401 is disposed, and may be disposed around (e.g., to surround) an outer surface of the protection circuit module 300 in a state in which the protective film 400 is coupled to surround the protection circuit module 300 as shown in FIG. 1. A point "B" of FIGS. 1 and 8 is located on the heat dissipation portion 410, and the heat dissipation portion 410 may have a structure in which the insulating layer 402, the thermal conductive layer 401, and the protective layer 403 are sequentially stacked as shown in FIG. 9.

The heat dissipation portion 410 according to an embodiment of the present invention may have a structure in which the first heat dissipation portion 411, the second heat dissipation portion 412, and the third heat dissipation portion 413 are continuously connected. The first heat dissipation portion 411 may be disposed to face the first heat dissipation surface 333 disposed on the upper surface of the molding member 330, the second heat dissipation portion 412 may be disposed to face the second heat dissipation surface 334 disposed on an outer side surface of the molding member 330, and the third heat dissipation portion 413 may be disposed to face the substrate outer side surface 314 disposed on the outer side surface of the substrate 310.

Accordingly, the first heat dissipation portion 411 may be disposed to face the first heat dissipation surface 333 disposed on the upper surface of the molding member 330, the second heat dissipation portion 412 may be disposed to face the second heat dissipation surface 334 disposed on an outer side surface of the molding member 330, and the third heat dissipation portion 413 may be disposed to face the substrate outer side surface 314 disposed on the outer side surface of the substrate 310.

The heat dissipation portion 410 according to an embodiment of the present invention may further include a fourth heat dissipation portion 414 in contact with an outer surface of the terrace 200, i.e., the bottom surface of the terrace 200. The fourth heat dissipation portion 414 may be connected continuously with the third heat dissipation portion 413. In an embodiment, the first heat dissipation portion 411, the second heat dissipation portion 412, the third heat dissipation portion 413, and the fourth heat dissipation portion 414 may form together a "U" shape as a whole.

Heat generated by the FET 320 may reach the substrate outer side surface 314 through a circuit line formed on the second surface 313 of the substrate 310 and reach the first heat dissipation surface 333 and the second heat dissipation surface 334 through the molding body 331 of the molding member 330. The heat reaching the first heat dissipation surface 333 and the second heat dissipation surface 334 of the molding member 330 and the substrate outer side surface 314 of the substrate 310 may be transferred to each of the first heat dissipation portion 411, the second heat dissipation portion 412, and the third heat dissipation portion 413, and may be more uniformly distributed and dissipated throughout the heat dissipation portion 410 including the fourth heat dissipation portion 414.

In an embodiment, the heat dissipation portion 410 may have a rectangular shape having a horizontal direction (X direction) width and a longitudinal direction (Y direction) width. The first fixed end portion 420 may be formed to extend in the horizontal direction (X direction) along an end portion of the heat dissipation portion 410 in the longitudinal direction (Y direction), and may be bonded and fixed to the battery cell 100. The second fixed end portion 430 may be formed to extend in the horizontal direction (X direction) along an edge portion of the heat dissipation portion 410 in the longitudinal direction (Y direction) at an opposite side of the first fixed end portion 420, and may be bonded and fixed to the terrace 200.

In an embodiment, the first fixed end portion 420 and the second fixed end portion 430 may each be formed by stacking and bonding only the insulating layer 402 and the protective layer 403 with each other except for the thermal conductive layer 401. Accordingly, the first fixed end portion 420 and the second fixed end portion 430 may each have a smaller thickness and may be more firmly in close contact with and attached to the battery cell 100 and the terrace 200.

The protective film 400 according to the present embodiment may further include a third fixed end portion 440 and a fourth fixed end portion 450. The third fixed end portion 440 may be formed to extend in the longitudinal direction (Y direction) along an end portion of the heat dissipation portion 410 in the horizontal direction (X direction), and both, or opposite, end portions of the third fixed end portion 440 in the longitudinal direction may be integrally connected to the first fixed end portion 420 and the second fixed end portion 430, respectively. The fourth fixed end portion 450 may be formed to extend in the longitudinal direction (Y direction) along an edge portion of the heat dissipation portion 410 on an opposite side of the third fixed end portion 440 in the horizontal direction (X direction), and both, or opposite, end portions of the fourth fixed end portion 450 in the longitudinal direction may be integrally connected to the first fixed end portion 420 and the second fixed end portion 430, respectively.

In an embodiment, the first fixed end portion 420, the second fixed end portion 430, the third fixed end portion 440, and the fourth fixed end portion 450 are integrally and continuously formed along the edge portions of the heat dissipation portion 410, and the thermal conductive layer 401 of the heat dissipation portion 410 may be hermetically sealed in all directions, and the heat dissipation portion 410 may be firmly attached and fixed to the battery cell 100, the terrace 200, and the protection circuit module 300 in all directions.

The protective film 400 according to the present embodiment may further include a side surface protection portion 460. The side surface protection portion 460 has a shape that protrudes further in the horizontal direction (X direction) from the third fixed end portion 440, as shown in FIG. 8.

The protective film 400 may be coupled in the order of attaching the second fixed end portion 430 to the bottom surface of the terrace 200, and then bending or folding the heat dissipation portion 410 upward from the lower side to form a "U" shape and surround the outer surface of the protection circuit module 300, and attaching the first fixed end portion 420 to the battery cell 100.

Some of the heat dissipation portion 410 and the third fixed end portion 440 may be attached to the bottom surface of the terrace 200, along with the second fixed end portion 430. In a state in which some of the heat dissipation portion 410 and the third fixed end portion 440 are attached to the bottom surface of the terrace 200, the side surface protection portion 460 may be located below the terrace 200 to protrude further in the horizontal direction than an end portion of the protection circuit module 300 in the horizontal direction.

The side surface protection portion 460 may be bent or lifted toward the protection circuit module 300 from the terrace 200 side to be bonded to the first heat dissipation surface 333. In an embodiment, the side surface protection portion 460 surrounds an end portion of the protection circuit module 300 in the horizontal direction (X direction), such that the end portion of the protection circuit module 300 in the horizontal direction (X direction) may be insulated and protected by the protective layer 403 and the flame-retardant layer 404.

In an embodiment, the protective film 400 may be coupled in the order of attaching the first fixed end portion 420 to the battery cell 100, and then bending or folding the heat dissipation portion 410 downward from the upper side to form a "U" shape and surround the outer surface of the protection circuit module 300, and attaching the second fixed end portion 430 to the bottom surface of the terrace 200. In addition, in a state in which the second fixed end portion 430 is attached to the bottom surface of the terrace 200, the side surface protection portion 460 may be bent or lifted toward the protection circuit module 300 from the terrace 200 side to be bonded to an upper portion of the heat dissipation portion 410.

The battery pack 1 according to the present embodiment may further include the fixing tape 500. In an embodiment, the fixing tape 500 may have a sheet form with an adhesive material coated on a surface thereof. The fixing tape 500 according to the present embodiment may include a first fixing portion 510 seated on an upper side surface of the terrace 200 and a second fixing portion 520 seated on the end surface of the battery cell 100.

The first fixing portion 510 and the second fixing portion 520 may extend in different directions corresponding to the longitudinal direction and the height direction, respectively, and may have a shape bent in a generally "L" shape. An upper surface of the first fixing portion 510 may be disposed to face the first surface 312 of the protection circuit module 300, and an inner side surface of the second fixing portion 520 may be disposed to face an outer side surface of the protection circuit module 300.

The first fixing portion 510 is disposed to face an electronic element mounted on the first surface 312 of the protection circuit module 300 and may be in direct contact with the electronic element. An adhesive material may be applied to the surface of the first fixing portion 510, and the electronic element may be bonded to the surface of the adhesive region. Accordingly, the protection circuit module 300 may be securely fixed on the terrace 200 by an adhesive force between the electronic element and the adhesive region of the first fixing portion 510.

An inner side surface of the protection circuit module 300 may have a flat plate shape in which an inner side surface of the substrate 310 and an inner side surface of the molding member 330 are continuously connected in the Z direction. The second fixing portion 520 may be in direct contact with the inner side surface of the protection circuit module 300. An adhesive material may be applied to the surface of the second fixing portion 520, and the inner side surface of the protection circuit module 300 may be bonded to the surface of the adhesive region. The protection circuit module 300 may be firmly bonded to the second fixing portion 520 over an area formed by the inner side surface of the substrate 310 and the inner side surface of the molding member 330 together, and may be securely fixed to the end surface of the battery cell 100.

A reference numeral 800 shown in FIGS. 1 to 4 denotes an extension member 800 extending to the outside of the battery cell 100. The extension member 800 may be, for example, an electronic component electrically connected to the substrate 310, and may also be, for example, another substrate member configured to electrically connect the battery cell 100 to an external substrate.

In an embodiment, the protection circuit module 300 and the terrace 200 together may have a rectangular parallelepiped shape as a whole. In this case, when the thermal conductive layer 401 and the heat dissipation portion 410 form a "U" shape along outer surfaces of the protection circuit module 300 and the terrace 200, an area for heat transfer and dissipation may be maximally secured. Accordingly, in an embodiment, the thermal conductive layer 401 and the heat dissipation portion 410 may have a rectangular shape in the view shown in FIG. 8.

Herein, the present invention will be described in further detail with some embodiments of the present invention. However, the following examples are merely illustrative to help the understanding of the present invention, and the scope of the present disclosure is not limited thereto.

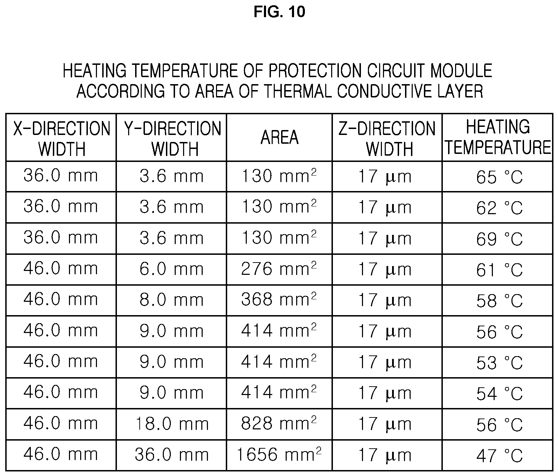

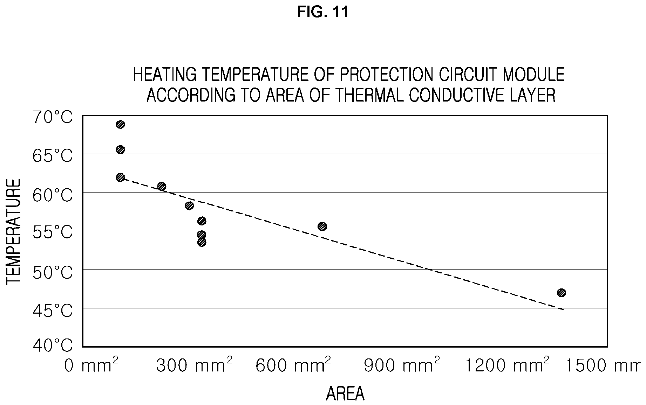

FIG. 10 is a table illustrating the results of measuring a heating temperature of the protection circuit module according to an area of the thermal conductive layer according to the embodiment of FIG. 1; and FIG. 11 is a graph illustrating the measurement results depicted in FIG. 10.

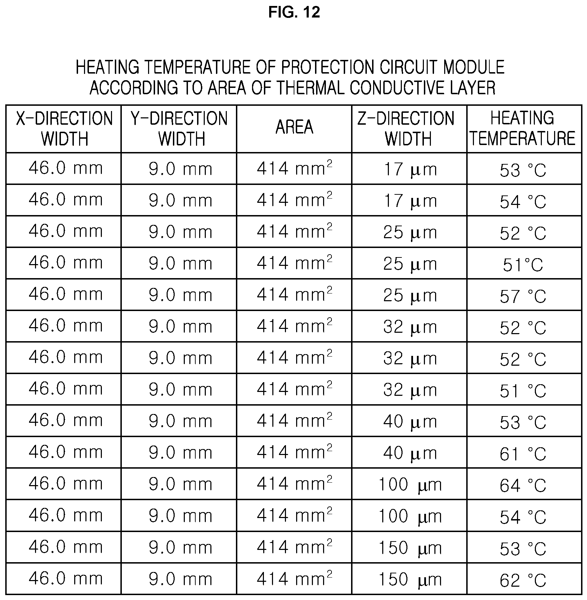

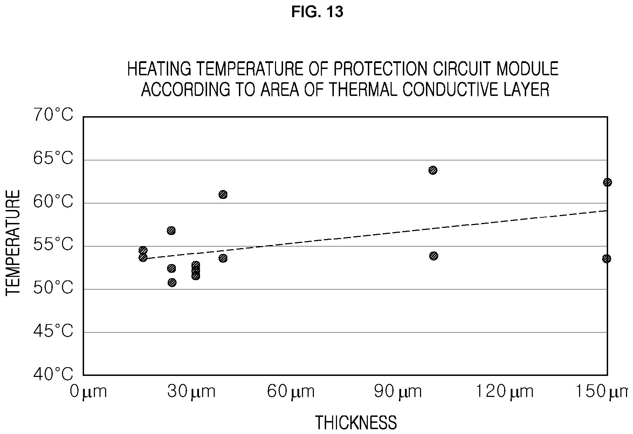

A battery pack in which a thermal conductive layer 401 has a rectangular shape was manufactured by applying graphite as a thermally conductive material of the thermal conductive layer 401. The "area" shown on FIG. 10 and FIG. 11 refers to an area of the thermal conductive layer 401 provided in the heat dissipation portion 410 shown in FIG. 8, and corresponds to a value of [width of thermal conductive layer 401 in X direction] × [width of thermal conductive layer 401 in Y direction]. Here, a "thickness" refers to a thickness of the thermal conductive layer 401 provided in the heat dissipation portion 410 shown in FIG. 8, and corresponds to [width of thermal conductive layer 401 in Z direction]. This is commonly applied to the "area" and the "thickness" shown in FIGS. 12 and 13.

In determining heat dissipation performance of the battery pack 1, 60 °C may be used as a reference. When a heating temperature of the protection circuit module 300 exceeds 60 °C, it may be determined that an intended heat dissipation performance is not satisfied, and when the heating temperature is less than or equal to 60 °C, it may be determined that the intended heat dissipation performance is satisfied.

Referring to the measurement results of FIGS. 10 and 11, it can be seen that the heating temperature of the protection circuit module 300 exceeds 60 °C when the area of the thermal conductive layer 401 is less than or equal to 276 mm². It can be seen that the heating temperature of the protection circuit module 300 is reliably derived to be less than or equal to 60 °C when the area of the thermal conductive layer 401 is in a range greater than or equal to 368 mm² and less than or equal to 414 mm². The heating temperature of the protection circuit module 300 is derived to be less than or equal to 60 °C even when the area of the thermal conductive layer 401 is in a range exceeding 414 mm² but this range exceeds an area formed by outer surfaces of the protection circuit module 300 and the terrace 200, which are of a miniaturized size intended to be implemented by the present invention.

It can be seen that the heating temperature of the protection circuit module 300 is reliably derived to be less than or equal to 60 °C when the area of the thermal conductive layer 401 is in a range greater than or equal to 368 mm² and less than or equal to 414 mm². In an embodiment, the area of the thermal conductive layer 401 may be applied in a range greater than or equal to 350 mm² and less than 450 mm² in consideration of manufacturing and heat measurement errors of the battery pack 1.

In an embodiment, the thermal conductive layer 401 has a rectangular shape having a width of 46 mm in the X direction and a width of 9 mm in the Y direction. Of course, the widths of the thermal conductive layer 401 in the X direction and the Y direction may have a tolerance when the area of the thermal conductive layer 401 is in a range greater than or equal to 350 mm² and less than 450 mm².

FIG. 12 is a table illustrating results of measuring a heating temperature of the protection circuit module according to a thickness of the thermal conductive layer according to the embodiment of FIG. 1; and FIG. 13 is a graph illustrating the measurement results depicted in FIG. 12.

A battery pack 1 was manufactured by applying a thermal conductive layer 401 having a rectangular shape with a width of 46 mm in the X direction and a width of 9 mm in the Y direction according to the measurement results of FIGS. 10 and 11. Referring to the measurement results of FIGS. 12 and 13, it can be seen that, when a thickness of the thermal conductive layer 401 exceeds 32 µm, a heating temperature of the protection circuit module 300 is greater than 60 °C or a deviation of the experimental results is large within 10 °C. It can be seen that, when the thickness of the thermal conductive layer 401 is in a range less than or equal to 32 µm, the heating temperature of the protection circuit module 300 is the lowest to 51°C to 52°C and is reliably derived when the thickness of the thermal conductive layer 401 is 32 µm.

It can be seen that, under the condition that the thermal conductive layer 401 made of a graphite material has a rectangular shape with a width of 46 mm in the X direction and a width of 9 mm in the Y direction, the heating temperature of the protection circuit module 300 is reliably derived in a range of 51 °C to 52 °C when the thickness of the thermal conductive layer 401 is 32 µm. In an embodiment, the thickness of the thermal conductive layer 401 may be applied in a range of 30 µm to 35 µm in consideration of manufacturing and thermal measurement errors of the battery pack 1.

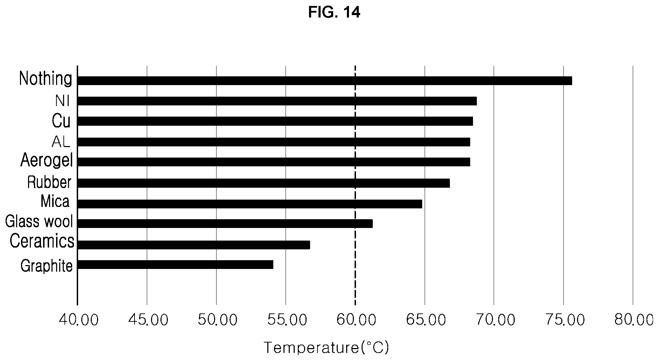

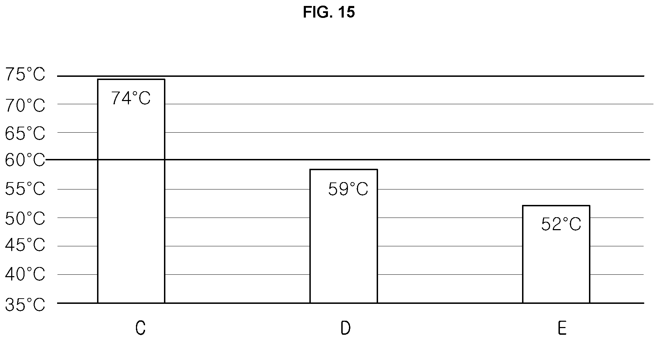

FIG. 14 is a graph illustrating results of measuring heat generation for each heat dissipation material; and FIG. 15 is a graph illustrating the results of measuring a heating temperature of the battery pack according to the embodiment of FIG. 1.

Referring to FIG. 14, it can be seen that when various thermally conductive materials, including aerogel, ceramics, and the like, are applied as the material of the thermal conductive layer 401 under the same conditions, the heating temperature of the protection circuit module 300 is the lowest when graphite is applied.

Referring to FIG. 15, it can be seen that, compared to an example (corresponding to a first bar column C in FIG. 15) in which the protective film 400 on which the thermal conductive layer 401 is not formed is applied, and the heating temperature of the protection circuit module 300 is 74 °C, according to an example (corresponding to a second bar column D in FIG. 15) in which graphite is applied as the material of the thermal conductive layer 401 of the protective film 400 under the same conditions as FIGS. 10 and 11, the heating temperature of the protection circuit module 300 is further lowered by 15 °C to 59 °C.

It can be seen that, compared to an example (corresponding to a second bar column D in FIG. 15) in which the molding member 330 is not included and only graphite is applied as the material of the thermal conductive layer 401 of the protective film 400, according to an example (corresponding to the third bar column E in FIG. 15) in which graphite is applied as the material of the thermal conductive layer 401 of the protective film 400 and the protection circuit module 300 includes the molding member 330 according to the present embodiment, the heating temperature of the protection circuit module 300 is further reduced by 7 °C to a lowest of 52 °C.

As described above, the battery pack 1 according to the present invention has a structure in which the protective film 400 around (e.g., surrounding) the protection circuit module 300 includes a thermally conductive material, and excellent heat dissipation performance can be realized without having to provide additional heat dissipation members, for example, a cover tape to protect the protection circuit module 300 from the external environment and a heat dissipation tape to discharge heat generated by the protection circuit module 300.

The battery pack 1 according to the present invention can realize excellent heat dissipation performance, as, in an embodiment, the thermal conductive layer 401 of the protective film 400 includes graphite, and can more reliably realize and maintain the intended heat dissipation performance while preventing or substantially preventing the thermal conductive layer 401 from breaking even in the event of an external impact or flexural deformation by covering both surfaces of the thermal conductive layer 401 with the insulating layer 402 and the protective layer 403.

The battery pack 1 according to the present invention can more smoothly, or easily, and reliably transfer heat generated by the FET 320 to the protective film 400 through the molding member 330 by mounting the FET 320 on one of both surfaces of the protection circuit module 300 and covering the FET 320 with the molding member 330 to ensure sufficient contact area with the protective film 400.

In an embodiment, according to the battery pack 1 according to the present invention, a longitudinal-direction width (W1 in FIG. 5) of the protective film 400, which was 4.0 mm, can be further reduced to 3.6 mm or less according to the example in which the protective film 400 on which the thermal conductive layer 401 is not formed is applied, and a height-direction height (W2 in FIG. 5) of the protection circuit module 300 can also be further reduced by disposing the FET 320 and the molding member 330 on only one of both surfaces of the protection circuit module 300.

Accordingly, it is possible to realize miniaturization of the protection circuit module 300 while satisfying the same heating temperature condition (for example, 60 °C or less) and to prevent or substantially prevent the capacity of the battery pack 1 from being lost due to the increase in size of the protection circuit module 300.

Herein, a battery pack according to another embodiment of the present invention will be described.

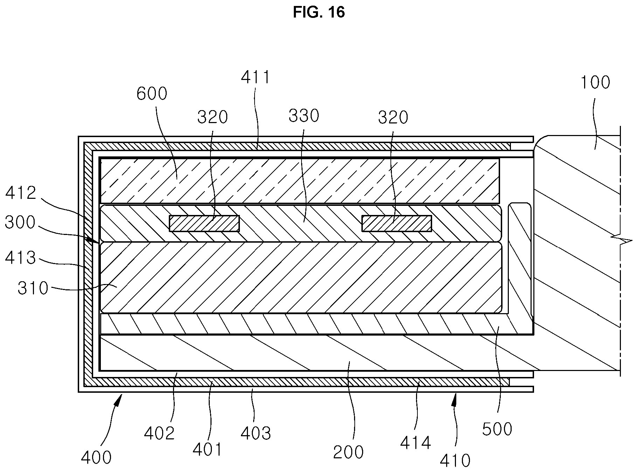

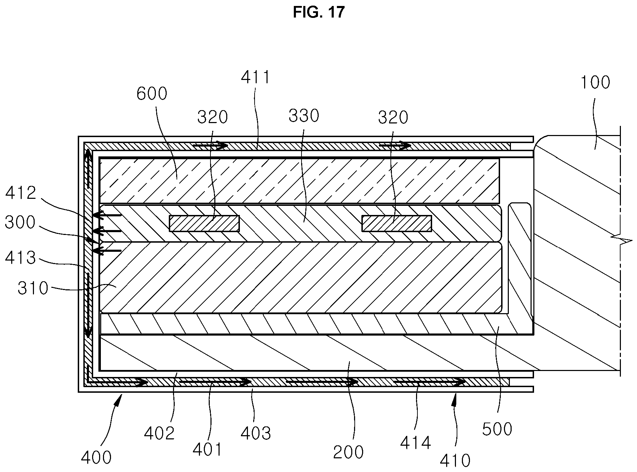

FIG. 16 is a conceptual view schematically illustrating a configuration of a battery pack according to another embodiment of the present invention; and FIG. 17 is a conceptual view illustrating an example of a heat transfer path according to the configuration of the battery pack according to the embodiment of FIG. 16.

Referring to FIGS. 16 and 17, a battery pack 1 according to the present embodiment of the present invention may have a configuration that further includes a heat dissipation blocking member 600 as compared to the battery pack 1 according to the embodiment of FIG. 1.

Accordingly, in describing the configuration of the battery pack 1 according to the present embodiment of the present invention, only the heat dissipation blocking member 600 different from the battery pack 1 according to the embodiment of FIG. 1 will be described.

For the remaining components of the battery pack 1 according to the present embodiment of the present invention, the description of the battery pack 1 according to the embodiment of FIG. 1 may be applied without modification.

The heat dissipation blocking member 600 according to the present embodiment of the present invention may include an insulating material having low thermal conductivity enough to suppress heat transfer through the molding member 330 or the protective film 400. The heat dissipation blocking member 600 may include an insulating material having a lower thermal conductivity than the molding member 330 or the protective film 400. As an example, the protective film 400 may include graphite, and the heat dissipation blocking member 600 may include aerogel or a ceramic.

The heat dissipation blocking member 600 may be disposed in contact with a portion of the molding member 330 or may be disposed in contact with a portion of the protective film 400 to block a portion of a heat dissipation path formed by the molding member 330 or the protective film 400. The heat dissipation blocking member 600 may be disposed inside the protective film 400. The heat dissipation blocking member 600 may be disposed to be seated on an upper surface of the molding member 330. The protective film 400 may be disposed around (e.g., to surround) the protection circuit module 300 and the heat dissipation blocking member 600, which is stacked on the protection circuit module 300, together.

The heat dissipation blocking member 600 has widths in the X direction and the Y direction corresponding to the upper surface of the molding member 330, and may be disposed to be seated on the upper surface of the molding member 330. A lower portion of the heat dissipation blocking member 600 may face the molding member 330, and an upper surface and a side surface of the heat dissipation blocking member 600 may be disposed to face the protective film 400.

In an embodiment, heat generated by the FET 320 may be blocked by the heat dissipation blocking member 600, such that the transfer of the heat to the upper side may be suppressed. The heat generated by the FET 320 may be primarily transferred to a side portion of the protective film 400 through the molding member 330 and a side surface of the substrate 310, and then may be spread to an upper portion and a lower portion of the protective film 400 along the thermal conductive layer 401. The heat generated by the FET 320 is transferred to an intermediate portion of the protective film 400, which has a shape extending in a U-shape, in an extending direction and then spread to both end portions of the protective film 400 in the extending direction.

As described above, the heat dissipation blocking member 600 can be used to block or change a portion of the heat transfer and dissipation path formed by the molding member 330 and the protective film 400. For example, when a heat-sensitive component is disposed on the molding member 330, by disposing the heat dissipation blocking member 600 on the molding member 330 as in the present embodiment of the present invention, the amount of upward heat dissipation of the battery pack 1 can be reduced as compared to the embodiment of FIG. 1.

Herein, a battery pack according to another embodiment of the present invention will be described.

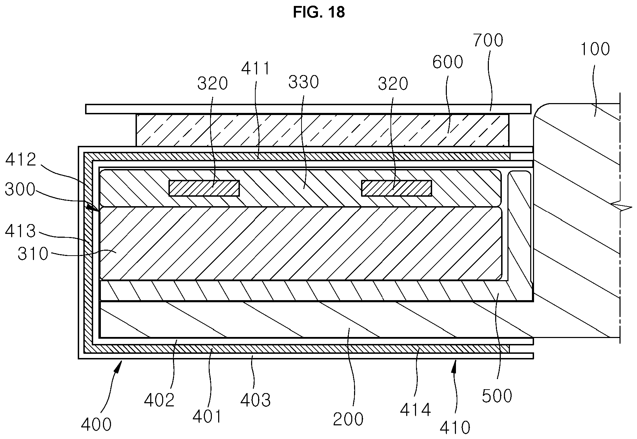

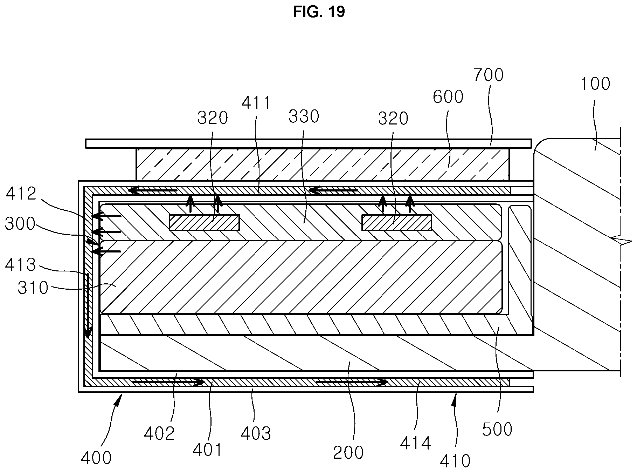

FIG. 18 is a conceptual view schematically illustrating a configuration of a battery pack according to another embodiment of the present invention; and FIG. 19 is a conceptual view illustrating an example of a heat transfer path according to the configuration of the battery pack according to the embodiment of FIG. 18.

Referring to FIGS. 18 and 19, a battery pack 1 according to another embodiment of the present invention may have a configuration that further includes a heat dissipation blocking member 600 as compared to the battery pack 1 according to the embodiment of FIG. 1. In addition, the battery pack 1 according to the present embodiment of the present invention may have a configuration in which the heat dissipation blocking member 600 is disposed outside the protective film 400 as compared to the battery pack 1 according to the embodiment of FIG. 16.

Accordingly, in describing the configuration of the battery pack 1 according to the present embodiment of the present invention, only the arrangement of the heat dissipation blocking member 600 different from the battery pack 1 according to the embodiment of FIG. 16 will be described.

For the remaining components of the battery pack 1 according to the present embodiment of the present invention, the descriptions of the battery packs 1 according to each of the embodiment of FIG. 1 and the embodiment of FIG. 16 may be applied without modification.

The heat dissipation blocking member 600 according to the present embodiment of the present invention may be disposed in contact with a portion of the protective film 400 to block a portion of a heat dissipation path formed by the protective film 400. The heat dissipation blocking member 600 may be disposed outside the protective film 400. The heat dissipation blocking member 600 may be disposed to be seated on an upper portion of the protective film 400. The heat dissipation blocking member 600 may be coupled to the protective film 400, with an upper portion thereof surrounded by a binding member 700 whose side portion has a tape structure. The heat dissipation blocking member 600 has widths in the X direction and the Y direction corresponding to an upper surface of the molding member 330, and may be disposed to be seated on an upper surface of the protective film 400.

In an embodiment, heat generated by the FET 320 may be blocked by the heat dissipation blocking member 600, such that the transfer of the heat to the upper side may be suppressed. The heat transferred from the protection circuit module 300 to an upper portion and an upper side portion of the protective film 400 may smoothly, or easily, reach a lower side portion and a lower portion of the protective film 400 located below the upper portion and the upper side portion of the protective film 400 along the thermal conductive layer 401 similar to the first embodiment of the present invention. The heat generated from the FET 320 through this process may be primarily dissipated at side and lower portions of the battery pack 1.

As described above, the heat dissipation blocking member 600 can be used to block or modify a portion of the heat transfer and dissipation path formed by the molding member 330 and the protective film 400. For example, when a heat-sensitive component is disposed on an upper side of the molding member 330, by disposing the heat dissipation blocking member 600 on the upper side of the protective film 400 as in the present embodiment of the present invention, an amount of upward heat dissipation of the battery pack 1 can be reduced as compared to the embodiment of FIG. 1.

A battery pack according to one or more embodiments of the present invention has a structure in which a protective film surrounding a protection circuit module includes a thermally conductive material, and thus can realize excellent heat dissipation performance without additionally including a separate heat dissipation member, for example, a heat dissipation tape for discharging heat generated by the protection circuit module in addition to a cover tape for protecting the protection circuit module from the external environment.

A battery pack according to one or more embodiments of the present invention can realize excellent heat dissipation performance as a thermal conductive layer of a protective film includes graphite, and by covering both, or opposite, surfaces of the thermal conductive layer with an insulating layer and a protective layer, an intended heat dissipation performance can be realized and maintained more securely while preventing or substantially preventing the thermal conductive layer from breaking even in the event of an external impact or bending deformation.

A battery pack according to one or more embodiments of the present invention can smoothly and reliably transfer heat generated by a field-effect transistor to a protective film through a molding member by mounting the field-effect transistor on one of both, or opposite, surfaces of a protection circuit module and covering the field-effect transistor with the molding member to ensure sufficient contact area with the protective film.

Accordingly, in a battery pack according to one or more embodiments of the present invention, it is possible to realize miniaturization of a protection circuit module while satisfying the same heating temperature condition and to prevent or substantially prevent capacity of the battery pack from being lost due to an increase in size of the protection circuit module.

However, aspects and effects obtainable through the present disclosure are not limited to the above aspects and effects, and other technical aspects and effects that are not mentioned will be clearly understood by those skilled in the art from the following description of the present disclosure.

While the present disclosure has been described with reference to some embodiments shown in the drawings, these embodiments are merely illustrative and it is to be understood that various modifications and equivalent other embodiments can be derived by those skilled in the art on the basis of the embodiments, while the technical scope of the present disclosure is defined by the claims.

## Claims

1. A battery pack (1) comprising:
a battery cell (100);
a terrace (200) extending from the battery cell (100);
a protection circuit module (300) facing the terrace (200); and
a protective film (400) comprising a thermally conductive material and arranged around the protection circuit module (300).

2. The battery pack (1) according to claim 1, wherein the protection circuit module (300) comprises:
a substrate (310) comprising a first surface (312) facing the terrace (200), and a second surface (313) at an opposite side of the first surface (312); and
one or more field-effect transistors (320) on the second surface (313).

3. The battery pack (1) according to claim 2, wherein the one or more field-effect transistors (320) comprise two field-effect transistors on the second surface (313).

4. The battery pack (1) according to claim 2 or 3, wherein the protection circuit module (300) further comprises a molding member (330) covering the one or more field-effect transistors on the second surface (313).

5. The battery pack (1) according to claim 4, wherein
the molding member (330) comprises a molding body (331) around the one or more field-effect transistors (320),
wherein the molding body (331) comprises:
a fixing surface (332) that is fixed to the substrate (310);
a first heat dissipation surface (333) on an opposite side of the fixing surface (332) and facing the protective film (400); and
a second heat dissipation surface (334) connecting the fixing surface (332) to the first heat dissipation surface (333) and facing the protective film (400).

6. The battery pack (1) according to claim 5, wherein
the molding body (331) extends along the substrate (310), and
each of the first heat dissipation surface (333) and the second heat dissipation surface (334) comprises a flat surface to be in surface contact with the protective film (400).

7. The battery pack (1) according to any one of claims 4 to 6, further comprising a fixing tape (500) between the terrace (200) and the protection circuit module (300) and configured to fix the protection circuit module (300) to the terrace (200),
wherein the fixing tape (500) comprises:
a first fixing portion (510) seated on the terrace (200) and facing the first surface (312); and
a second fixing portion (520) seated on the battery cell (100) and facing a side surface of the substrate (310) and a side surface of the molding member (330).

8. The battery pack (1) according to any one of claims 1 to 7, wherein the protective film (400) comprises:
a thermal conductive layer (401) comprising a thermally conductive material;
an insulating layer (402) stacked on an inner side surface of the thermal conductive layer (401) and facing the protection circuit module (300); and
a protective layer (403) stacked on an outer side surface of the thermal conductive layer (401).

9. The battery pack (1) according to claim 8, wherein the thermal conductive layer (401) comprises graphite.

10. The battery pack (1) according to claim 8 or 9, wherein an area of the thermal conductive layer (401) is greater than or equal to 350 mm² and less than 450 mm².

11. The battery pack (1) according to any one of claims 8 to 10, wherein the insulating layer (402) comprises at least one of polyethylene terephthalate, polypropylene, polyimide, polyethylene, or aramid.

12. The battery pack (1) according to any one of claims 8 to 11, wherein the protective layer (403) comprises at least one of polyethylene terephthalate, polypropylene, polyimide, polyethylene, or aramid.

13. The battery pack (1) according to any one of claims 1 to 8, wherein the protective film (400) comprises:
a heat dissipation portion (410) around the protection circuit module (300) and on which the thermal conductive layer (401) is located;
a first fixed end portion (420) on an end of the heat dissipation portion (410) and fixed to the battery cell (100); and
a second fixed end portion (430) on an opposite side of the first fixed end portion (420) and fixed to the terrace (200).

14. The battery pack (1) according to claim 5 or any one of claims 6 to 13, as far as depending on claim 5, wherein
the heat dissipation portion (410) comprises:
a first heat dissipation portion (411) facing the first heat dissipation surface (333) on a surface of the molding member (330);
a second heat dissipation portion (412) facing the second heat dissipation surface (334) on a side surface of the molding member (330); and
a third heat dissipation portion (413) facing a side surface (314) of the substrate (310).

15. The battery pack (1) according to any one of claims 1 to 14, further comprising a heat dissipation blocking member (600) in contact with a portion of the protection circuit module (300) or a portion of the protective film (400).
